# EUROPÄISCHE PATENTSCHRIFT

(11) **EP 0 843 065 B1**
(45) Veröffentlichungstag und Bekanntmachung des Hinweises auf die Patenterteilung: **05.03.2003**
(21) Anmeldenummer: 97112253.6
(22) Anmeldetag: 17.07.1997
(51) Int. Cl.: E05F 15/00, H01H 3/14, F16P 3/12

(54) **Schliesskantensicherheitsleiste**
Safety door closure edge
Bordure de sécurité pour arête de vantail

(30) Priorität: 19.11.1996 DE 19647720
(43) Veröffentlichungstag der Anmeldung: 20.05.1998
(73) Patentinhaber: Wampfler Aktiengesellschaft, 79576 Weil am Rhein-Maerkt (DE)
(72) Erfinder: Thiel, Lothar, 79618 Rheinfelden (DE)
(74) Vertreter: Rapp, Bertram, Dr.

(56) Entgegenhaltungen:
- DE-U- 9 417 518

## Beschreibung

Die Erfindung betrifft eine Sicherheitsleiste, die an den Schließkanten beweglicher Einrichtungen angeordnet werden kann. Eine solche Sicherheitsleiste weist eine Vielzahl von Kontaktelementen auf, welche längs der Sicherheitsleiste aneinandergereiht und durch eine axiale Vorspannung zusammengedrückt werden. Derartige Sicherheitsleisten haben den Zweck, bewegliche Einrichtungen, bei denen Quetschgefahr besteht, wie z.B. automatische Fahrzeugtüren, bei Kontakt mit Hindernissen zu stoppen und eventuell eine Bewegung in umgekehrter Richtung einzuleiten.

Bisher sind Sicherheitsleisten bekannt; die wie die EP 0 103 726-A aus einem Schlauch und davon umgebenen Kontaktelementen bestehen. Hier wird die axiale Vorspannung, die für die Kontaktierung der Kontaktelemente im Ruhezustand sorgt, durch den die Kontaktelemente umgebenden Schlauch erzeugt. Dazu sind die Kontaktelemente mit dem Schlauch kraft- oder stoffschlüssig verbunden.

Problematisch ist bei solchen Vorrichtungen die Belastung des Schlauchbereiches zwischen den Kontaktelementen. Durch Temperaturschwankungen ausgelöste Längenänderungen sowie die Betätigung der Sicherheitsleiste an sich ergeben hier häufige lokale Spannungsschwankungen.

Weiterhin führt eine hohe axiale Vorspannung, die zur Gewährleistung-der Kontaktierung zwischen den einzelnen Schaltelementen wünschenswert ist, zwangsläufig zu einer verringerten Schaltsensibilität der Sicherheitsleiste, da die erforderliche Verbiegekraft ebenfalls zunimmt.

Ein zusätzliches Problem besteht im Schwanken der Vorspannung, da sich der E-Modul des Schlauches temperatur- und alterungsbedingt verändert.

Es besteht daher die Aufgabe, eine wartungsfreundliche Sicherheitsleiste mit verbesserter Schaltsicherheit und höherer Lebensdauer zu entwickeln.

Gelöst wird diese Aufgabe mit den kennzeichnenden Merkmalen des Anspruches 1. Vorteilhafte Ausgestaltungen sind den Unteransprüchen entnehmbar.

Einige Ausführungsbeispiele der Erfindung werden im folgenden unter Bezugnahme auf die begleitenden Zeichnungen näher beschrieben, welche zeigen:
- **Fig. 1**: Bestandteile einer Ausführungsform der Sicherheitsleiste und ihr Zusammenbau im Längsschnitt,
- **Fig. 2**: eine weitere Ausführungsform einer Sicherheitsleiste im Längsschnitt,
- **Fig. 3**: die in Fig. 2 dargestellte Sicherheitsleiste im Schaltzustand,
- **Fig. 4**: eine dritte Ausführungsform einer Sicherheitsleiste mit Schraubverbindung,
- **Fig. 5**: die in Fig. 4 dargestellte Sicherheitsleiste im Schaltzustand.

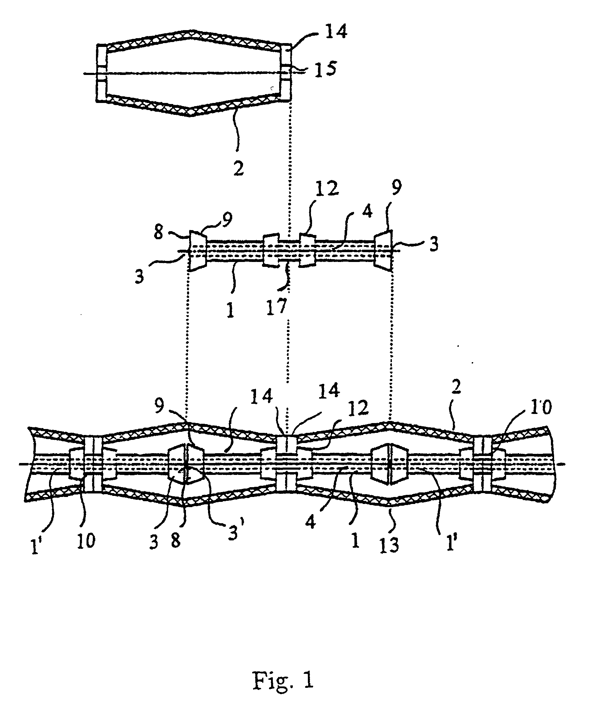

Figur 1 zeigt ein Schlauchstück 2 und ein Kontaktelement 1. Die wechselseitige Aneinanderreihung solcher Bauteile ergibt die dargestellte Schaltvorrichtung der Sicherheitsleiste.

Das Kontaktelement 1 ist in etwa zylinderförmig und besteht aus einem nichtleitenden Material. Es weist an seinen Enden Wulste 9 auf, an denen sich Kippzonen 8 befinden. In der Nähe seiner axialen Mitte besitzt es zwei umlaufende Wulste 12. Entlang seiner Mittelachse weist das Kontaktelement 1 einen Metallstift 4 auf, der axial an beiden Enden übersteht und dadurch die Kontaktzonen 3 bildet.

Das Schlauchelement 2 besteht aus einem ungefähr zylinderförmigen elastischen Rohrstück mit axial zur Mitte hin zunehmendem Durchmesser. An den beiden Enden ist es mit jeweils einer Scheibe 14 verschlossen. Die Scheibe 14 weist in ihrem Mittelpunkt eine Bohrung 15 auf, deren Durchmesser in etwa dem Durchmesser 17 des Kontaktelementes an seinem Mittelpunkt entspricht.

Zum Aufbau der Sicherheitsleiste sind die Kontaktelemente nun so angeordnet, daß ihre axiale Mittellinie auf der Mittellinie der Sicherheitsleiste verläuft und die Kontaktzonen 3 jeweils an der Kontakzone 3' des nächsten Kontaktelementes 1' anliegen. Die Schlauchstücke 2 sind so angeordnet, daß sie jeweils zwei Kontaktelemente 1 und 1' übergreifen. Die Zone erweiterten Schlauchdurchmessers 13 befindet sich dabei über den Wulsten 9 der Kontaktelemente. Die Scheiben 14 der Schläuche 2 sind dabei zwischen den Wulsten 12 im Mittelbereich der Kontaktelemente 1 angeordnet.

Im Ruhezustand liegen die Kontaktelemente koaxial aneinandergereiht nebeneinander und stellen über die Kontaktzonen 3 eine elektrisch leitfähige Verbindung zum jeweiligen Nachbarelement 1' und damit über die gesamte Sicherheitsleiste hinweg her. Durch den Eingriff der Scheiben 14 in die Wulste 12 werden die einzelnen Kontaktelemente durch die Schlauchstücke 2 gehalten und vorgespannt.

Der erweiterte Bereich 13 der Schlauchstücke 2 ermöglicht ein einfaches Zusammenstecken der Kontaktelemente 1, da er mittels Zusammenpressen auf einfache Weise eine Schlauchverlängerung ermöglicht und anschließend bei Einnahme seiner Ausgangsform die gewünschte Vorspannung aufbringt.

Wird nun eine derartige Sicherheitsleiste durch seitlichen Druck auf ihrer Ruheposition gebogen, dann kippen die Kontaktelemente 1 an den Kippzonen 8 des Wulstes 9 ab, so daß die Kontaktzonen 3, 3' zweier benachbarter Kontaktelemente voneinander entfernt und der Stromkreis so unterbrochen wird. Dabei wird das gesamte betroffene Schlauchstück 2 elastisch deformiert, so daß sich die Materialbeanspruchung gleichmäßig verteilt. Die Erweiterung 13 des Schlauches ermöglicht die notwendige Bewegungsfreiheit der Kontaktelemente.

Die Dicke der Wulste 9 im Bereich der Kippzonen 8 bestimmt den notwendigen Auslenkungsweg der Kontaktelemente bis zur Unterbrechung des Kontaktes.

Erfindungsgemäße Schalteinrichtungen zeichnen sich durch eine gleichmäßige Schlauchstückbelastung, lokal durch Variation von Schlauchform, -dicke und -material gezielt einstellbare Vorspannung sowie einfache Wartung durch Austauschbarkeit einzelner Schlauchstücke vor Ort aus.

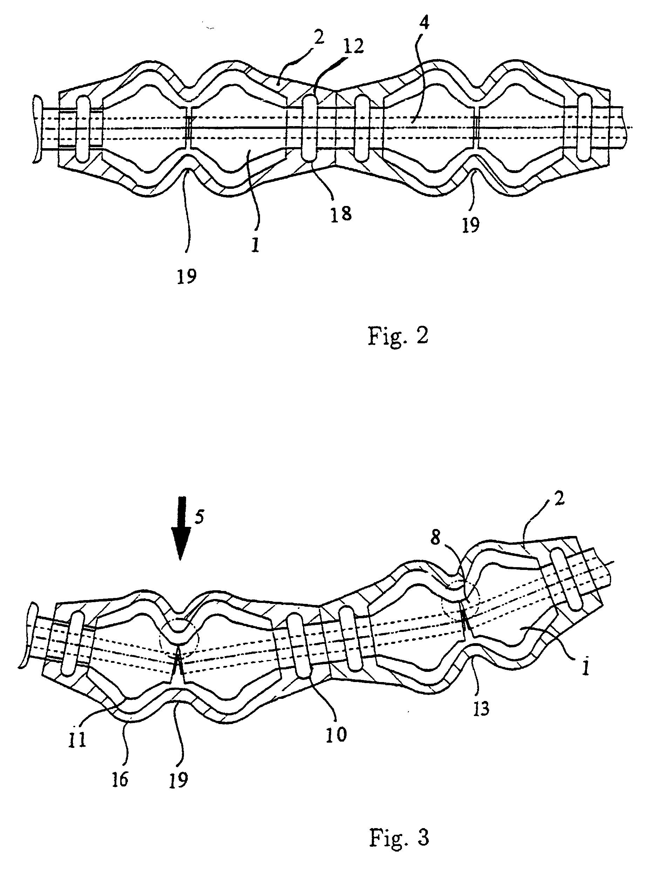

Figur 2 zeigt eine Gestaltungsvariante, bei der die Schlauchstücke 2 anstelle einer Scheibe 15 eine Einschnürung des Schlauchinnendurchmessers mit einer umlaufenden Ringnut 18 aufweisen. Der Außendurchmesser der Schlauchstücke 2 nimmt bei dieser Variante axial ebenfalls zur Mitte hin zu. Allerdings weist er in der Mitte selbst eine Einschnürung 19 auf, um eine Knickbewegung gezielt auf diese Stelle lenken zu können.

Die Kontaktelemente 1 folgen der Schlauchkontur, um den Abstand zwischen Kontaktelement 1 und Schlauchstück 2 annähernd gleichgroß zu halten.

Der Zusammenschluß von Kontaktelementen 1 und Schlauchstücken 2 erfolgt durch Einrasten eines umlaufenden Wulstes 12 an den Kontaktelementen 1 in eine umlaufende Ringnut 18 in den Schlauchstücken 2.

Wirkt nun eine äußere Kraft 5, wie in Figur 3 dargestellt, senkrecht auf die Sicherheitsleiste, so werden die Kontaktelemente 1 aus ihrer Ruheposition verschoben. Dabei kommt es zu einem Abknicken der Kontaktelemente 1 von den Nachbarelementen 1' an der Kippzone 8. Während die Ecken der nichtleitenden Kippzone 8 aneinandergepreßt werden, werden die in den Kontaktelementen 1 verlaufenden Metallstifte 4 räumlich voneinander getrennt. Dadurch kommt es zu einer Unterbrechung des elektrischen Kontaktes und somit zu einem Abschaltvorgang durch die Sicherheitsleiste.

Die Einschnürung des Schlauchdurchmessers im Bereich der Kontaktzonen zwischen benachbarten Kontaktelementen 1 dient als Soll-Knickstelle.

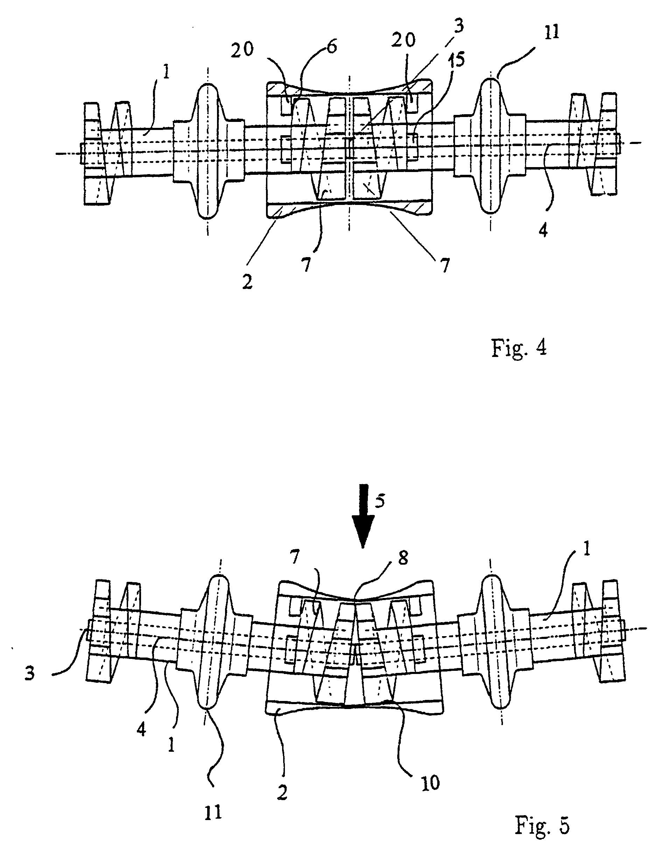

Figur 4 zeigt Schlauchstücke, in die die Kontaktelemente 1 an ihren Enden eingeschraubt werden. Zu diesem Zweck weisen die Enden der Kontaktelemente 1 ein Gewinde 7 auf, das konzentrisch zur Längsachse verläuft. Am Ende seines letzten Gewindeganges besitzt es einen Absatz 15. Das Schlauchstück 2 weist an seiner Innenseite zu beiden Austrittsseiten hin einen Dorn 20 auf.

In der Mitte eines Kontaktelementes 1 befindet sich jeweils eine Distanzscheibe 11, mit ähnlichem Durchmesser wie der Außendurchmesser der Schlauchstücke 2.

Zur Montage der Sicherheitsleiste werden die Kontaktelemente 1 mit ihrem Gewinde 7 über den Einschraubdorn 6 in die Schlauchstücke eingeschraubt. Der Absatz 15 am letzten Gewindegang verhindert ein zu tiefes Einschrauben und damit eine unzulässig hohe axiale Vorspannung.

Es sind auch andere Arten der Verschraubung denkbar, wie z.B. Gewinde an den Schlauchstücken und an den Kontaktelementen oder eine zusätzliche Schraube, die durch ein Loch im Schlauchstück gesteckt und mit dem jeweiligen Kontaktelement verschraubt wird.

Bei seitlicher Auslenkung durch eine Kraft 5 werden die Kontaktelemente 1 bei dieser Variante ebenfalls an den Kippzonen 8 abgekippt. Die Distanzscheibe 11 dient hier zur gleichmäßigen Übertragung der äußerer Kraft 5 vom Mantel der Sicherheitsleiste auf die Kontaktelemente und als Drehpunkt für die Kontaktelemente 1. Denn die Schaltvorrichtung muß auch auf Kräfte (Hindernisse) 5 reagieren, wenn diese an den mittleren Bereichen eines Kontaktelementes 1 angreifen.

Bei einer alternativen - nicht dargestellten - Ausführung der Kontaktelemente sind anstelle eines massiven isolierenden Körpers mit Metalleinlage lediglich isolierende Scheiben oder Platten auf die Enden der Metallstifte aufgesteckt und auf diese Weise Material eingespart.

Eine weitere Variante könnte darin bestehen, die Kontaktelemente vollständig aus Metall zu fertigen und die Kippzonen an den Wänden der Schläuche anzuordnen. Die Kippzonen hätten in diesem Falle die Gestalt von Wulsten oder Noppen, die auf der Schlauchinnenseite verlaufen und sich zwischen den Kontaktelementen befinden, ohne jedoch den Kontakt der Metallstifte zu unterbrechen. Bei einem Verknicken der Schalteinrichtung würden die Kontaktelemente nicht an der Kante des Nachbarelementes, sondern an dem dazwischenliegenden Schlauchwulst abkippen.

Eine andere Gestaltungsmöglichkeit besteht darin, die Kontaktelemente nicht symmetrisch, sondern im axialem Querschnitt betrachtet asymmetrisch zu gestalten. Es wäre denkbar, die Kontaktzonen nicht in der Schlauchquerschnittsebene anzuordnen, sondern z.B. bei nichtzylindrischen, flachen Kontaktelementen parallel zur Sicherheitsleiste. Es ist außerdem möglich, den Kontaktstift nur auf jeweils einer Seite überstehen zu lassen und auf der anderen Seite eine Vertiefung für den Metallstift des Nachbarkontaktelementes vorzusehen.

Eine weitere Gestaltungsmöglichkeit besteht darin, daß durch die Schlauchstücke nicht nur zwei sondern drei oder mehr Kontaktelemente übergriffen werden und durch axiales Zusammenpressen der äußersten Kontaktelemente die dazwischenliegenden ebenfalls kontaktiert werden.

## Patentansprüche

1. Sicherheitsleiste zur Anordnung an Schließkanten bewegbarer Einrichtungen, mit einer Schalteinrichtung, die eine Vielzahl von Kontaktelementen (1) aufweist, welche längs der Sicherheitsleiste mittels einer Führungsvorrichtung (2) aneinandergereiht sind und durch eine axiale Vorspannung längs der Sicherheitsleiste zusammengedrückt werden, wobei jedes Kontaktelement (1) Kontaktzonen (3) besitzt, welche innerhalb des jeweiligen Kontaktelementes elektrisch leitend miteinander verbunden sind (4) und im Ruhezustand elektrischen Kontakt zu benachbarten Kontaktelementen (14) nach beiden Seiten vermitteln, der bei Verbiegen der Schalteinrichtung durch äußeren Druck (5) lösbar ist, **dadurch gekennzeichnet, daß** die Vorspannung durch separate Schlauchstücke (2) erzeugt wird, welche in alternierender Folge jeweils zwei Kontaktelemente (1,1') übergreifen und jeweils die Kontaktzonen (3) der übergriffenen Kontaktelemente (1,1') gegeneinander drücken.

2. Sicherheitsleiste nach Anspruch 1, **dadurch gekennzeichnet, daß** die Schlauchstücke (2) an die Kontaktelemente (1) aufgestöpselt sind.

3. Sicherheitsleiste nach Anspruch 1, **dadurch gekennzeichnet, daß** die Schlauchstücke (2) durch Schraubverbindungen (6) mit den Kontaktelementen (1) verbunden sind.

4. Sicherheitsleiste nach Anspruch 3, **dadurch gekennzeichnet, daß** Schlauchstücke (2) und Kontaktelemente (1) wechselseitig direkt aneinander geschraubt sind und zu diesem Zweck mindestens eines der jeweils beteiligten Teile mindestens ein Gewinde (7) aufweist.

5. Sicherheitsleiste nach einem der vorangehenden Ansprüche, **dadurch gekennzeichnet, daß** die Kontaktelemente (1) nicht elektrisch leitende Kipp-Zonen (8) aufweisen, an denen die Kontaktelemente (1) bei Verbiegen der Sicherheitsleiste gegeneinander abkippbar sind, wodurch der Kontakt der Kontaktzonen (3) zwischen benachbarten Kontaktelementen (1) und (14) aufhebbar ist.

6. Sicherheitsleiste nach Anspruch 5, **dadurch gekennzeichnet, daß** die nicht elektrisch leitenden Kipp-Zonen (8) in einem Bereich (9) der Kontaktelemente (1) angeordnet sind, der bezüglich der Längsachse der Sicherheitsleiste vergrößerte Außenabmessungen aufweist.

7. Sicherheitsleiste nach einem der vorhergehenden Ansprüche, **dadurch gekennzeichnet, daß** die Kontaktzonen (3) und ihre elektrisch leitendende Verbindung (4) als Metallstift (4) ausgebildet sind.

8. Sicherheitsleiste nach einem der vorhergehenden Ansprüche, **dadurch gekennzeichnet. daß** die Kontaktzonen (3) und ihre elektrisch leitende Verbindung (4) als Metallröhrchen (4) ausgebildet sind.

9. Sicherheitsleiste nach einem der vorangehenden Ansprüche, **dadurch gekennzeichnet, daß** Verbindungen (10) zwischen Schlauchstücken (2) und Kontaktelementen (1) axial nahe der Mitte der Kontaktelemente (1) vorgesehen sind.

10. Sicherheitsleiste nach einem der vorangehenden Ansprüche, **dadurch gekennzeichnet, daß** die Verbindungen zwischen Schlauchstücken und Kontaktelementen axial nahe der Enden der Kontaktelemente vorgesehen sind.

11. Sicherheitsleiste nach einem der vorhergehenden Ansprüche, **dadurch gekennzeichnet. daß** die Kontaktelemente einteilig und aus leitfähigem Material ausgeführt sind und die nicht elektrisch leitfähigen Kippzonen an der Führungsvorrichtung angeordnet sind.

12. Sicherheitsleiste nach einem der vorhergehenden Ansprüche **dadurch gekennzeichnet, daß** die Kontaktelemente (1) aus mehreren Teilen mit unterschiedlicher elektrischer Leitfähigkeit zusammengesetzt sind.

13. Sicherheitsleiste nach einem der vorhergehenden Ansprüche, **dadurch gekennzeichnet, daß** die Kontaktelemente (1) und Schlauchstücke (2) in axialer Richtung gezielt lokale Vergrößerungen (11) der Außenabmessungen als Distanzhalter zur Führungsvorrichtung (2) und zum Außenmantel der gesamten Sicherheitsleiste aufweisen.

## Claims

1. Safety strip for arrangement on closing edges of moving devices, with a switching device which exhibits a plurality of contact elements (1) which are arranged in a row longitudinally along the safety strip by means of a guiding device (2) and pressed together by axial preloading longitudinally along the safety strip, each contact element (1) having contact zones (3) which are connected to one another in electrically conducting fashion (4) inside the respective contact element and when at rest ensure electrical contact with neighbouring contact elements (14) on both sides, which contact can be broken when the switching device is bent through external pressure (5), **characterised in that** the preloading is produced by separate pieces of hose (2) which in alternation each overlap two contact elements (1, 1') and in each case press the contact zones (3) of the overlapped contact elements (1, 1') against one another.

2. Safety strip according to claim 1, **characterised in that** the pieces of hose (2) are plugged to the contact elements (1).

3. Safety strip according to claim 1, **characterised in that** the pieces of hose (2) are connected to the contact elements (1) by screw connections (6).

4. Safety strip according to claim 3, **characterised in that** the pieces of hose (2) and contact elements (1) are screwed directly to one another in alternation and to this end at least one of the parts involved exhibits at least one thread (7).

5. Safety strip according to one of the preceding claims, **characterised in that** the contact elements (1) exhibit non-electrically conducting tilting zones (8) at which the contact elements (1) can be tilted against one another when the safety strip is bent, through which the contact of the contact zones (3) can be broken between neighbouring contact elements (1) and (14).

6. Safety strip according to claim 5, **characterised in that** the non-electrically conducting tilting zones (8) are arranged in an area (9) of the contact elements (1) which exhibits enlarged external dimensions relative to the longitudinal axis of the safety strip.

7. Safety strip according to one of the preceding claims, **characterised in that** the contact zones (3) and their electrically conducting connection (4) take the form of a metal pin (4).

8. Safety strip according to one of the preceding claims, **characterised in that** the contact zones (3) and their electrically conducting connection (4) take the form of a small metal tube (4).

9. Safety strip according to one of the preceding claims, **characterised in that** connections (10) are provided between the pieces of hose (2) and the contact elements (1) axially near the middle of the contact elements (1).

10. Safety strip according to one of the preceding claims, **characterised in that** the connections between the pieces of hose and the contact elements are provided axially near the ends of the contact elements.

11. Safety strip according to one of the preceding claims, **characterised in that** the contact elements are made in one piece and of conducting material and the non-electrically conducting tilting zones are arranged on the guiding device.

12. Safety strip according to one of the preceding claims, **characterised in that** the contact elements (1) are composed of a plurality of parts with different electrical conductivity.

13. Safety strip according to one of the preceding claims, **characterised in that** in the axial direction the contact elements (1) and pieces of hose (2) specifically exhibit local enlargements (11) of the external dimensions as spacers in relation to the guiding device (2) and to the external sheath of the entire safety strip.

## Revendications

1. Baguette de sécurité destinée à être disposée sur des bords de fermeture de dispositifs mobiles, comprenant un dispositif de commutation qui comporte de multiples éléments de contact (1) qui sont rangés l'un à côté de l'autre le long de la baguette de sécurité au moyen d'un dispositif de guidage (2) et sont serrés au moyen d'une précontrainte axiale le long de la baguette de sécurité, chaque élément de contact (1) comportant des zones de contact (3) qui, à l'intérieur de l'élément de contact chaque fois considéré, sont reliées entre elles (4) d'une manière électriquement conductrice et, à l'état de repos, transmettent vers les deux côtés un contact électrique avec les éléments de contact (14) voisins qui peut être interrompu lors d'une flexion du dispositif de commutation sous l'effet d'une pression (5) extérieure, **caractérisée en ce que** la précontrainte est produite au moyen de tronçons de tuyau souple (2) séparés qui, suivant une succession alternée, recouvrent chacun deux éléments de contact (1, 1') respectifs et appliquent chacun sous pression l'une sur l'autre les zones de contact (3) des éléments de contact (1, 1') recouverts.

2. Baguette de sécurité suivant la revendication 1, **caractérisée en ce que** les tronçons de tuyau souple (2) sont posés à la façon de bouchons sur les éléments de contact (1).

3. Baguette de sécurité suivant la revendication 1, **caractérisée en ce que** les tronçons de tuyau souple (2) sont reliés aux éléments de contact (1) au moyen de liaisons par vis (6).

4. Baguette de sécurité suivant la revendication 3, **caractérisée en ce que** tronçons de tuyau souple (2) et éléments de contact (1) sont mutuellement vissés directement les uns sur les autres et, à cet effet, au moins l'une des parties qui interviennent chaque fois comporte au moins un filet de filetage (7).

5. Baguette de sécurité suivant l'une des revendications précédentes, **caractérisée en ce que** les éléments de contact (1) comportent des zones de pliage (8) électriquement non conductrices à l'endroit desquelles les éléments de contact (1) peuvent faire l'objet d'un pliage l'un vis-à-vis de l'autre lors d'une flexion de la baguette de sécurité, de sorte que le contact des zones de contact (3) entre éléments de contact (1) et (14) voisins peut disparaître.

6. Baguette de sécurité suivant la revendication 5, **caractérisée en ce que** les zones de pliage (8) électriquement non conductrices sont situées dans une région (9) des éléments de contact (1) qui comporte des dimensions extérieures accrues vis-à-vis de l'axe longitudinal de la baguette de sécurité.

7. Baguette de sécurité suivant l'une des revendications précédentes, **caractérisée en ce que** les zones de contact (3) et leur liaison (4) électriquement conductrice sont réalisées sous forme de tige métallique (4).

8. Baguette de sécurité suivant l'une des revendications précédentes, **caractérisée en ce que** les zones de contact (3) et leur liaison (4) électriquement conductrice sont réalisées sous forme de petit tube métallique (4).

9. Baguette de sécurité suivant l'une des revendications précédentes, **caractérisée en ce que** des liaisons (10) entre tronçons de tuyau souple (2) et éléments de contact (1) sont prévues axialement au voisinage du milieu des éléments de contact (1).

10. Baguette de sécurité suivant l'une des revendications précédentes, **caractérisée en ce que** les liaisons entre tronçons de tuyau souple (2) et éléments de contact (1) sont prévues axialement au voisinage des extrémités des éléments de contact.

11. Baguette de sécurité suivant l'une des revendications précédentes, **caractérisée en ce que** les éléments de contact sont réalisés d'une seule pièce et en une matière conductrice et les zones de pliage électriquement non conductrices sont situées sur le dispositif de guidage.

12. Baguette de sécurité suivant l'une des revendications précédentes, **caractérisée en ce que** les éléments de contact (1) sont composés de plusieurs parties possédant une conductibilité électrique différente.

13. Baguette de sécurité suivant l'une des revendications précédentes, **caractérisée en ce que** les éléments de contact (1) et tronçons de tuyau souple (2) comportent d'une manière voulue et suivant la direction axiale, des parties locales (11) accrues en dimensions extérieures en tant qu'entretoises pour le dispositif de guidage (2) et pour l'enveloppe extérieure de l'ensemble de la baguette de sécurité.
